Europäisches Patentamt

European Patent Office

Office européen des brevets

(19)

(11) Veröffentlichungsnummer: **0 007 491**
**B1**

(12) **EUROPÄISCHE PATENTSCHRIFT**

(45) Veröffentlichungstag der Patentschrift: **01.04.81**

(21) Anmeldenummer: **79102296.5**

(22) Anmeldetag: **05.07.79**

(51) Int. Cl.³: **G 01 M 3/18,**
**G 21 C 17/00, F 22 B 37/00**

(54) Inspektionseinrichtung für Wärmetauscherrohre, insbesondere für Dampferzeuger in Kernkraftwerken.

(30) Priorität: **19.07.78 DE 2831822**

(43) Veröffentlichungstag der Anmeldung:
**06.02.80 Patentblatt 80/3**

(45) Bekanntmachung des Hinweises auf die Patenterteilung:
**01.04.81 Patentblatt 81/13**

(84) Benannte Vertragsstaaten:
**CH FR GB NL SE**

(56) Entgegenhaltungen:
**US - A - 3 913 752**

(73) Patentinhaber: **KRAFTWERK UNION AKTIENGESELLSCHAFT**
**c/o SIEMENS AG Postfach 261**
**D-8000 München 22 (DE)**

(72) Erfinder: **Kastl, Hans**
**Tulpenstrasse 11**
**D-8484 Neustadt a.d. Waldnaab (DE)**

(74) Vertreter: **Mehl, Ernst, Dipl.-Ing. et al,**
**Postfach 22 01 76**
**D-8000 München 22 (DE)**

Courier Press, Leamington Spa, England.

Inspektionseinrichtung für Wärmetauscherrohre, insbesondere für Dampferzeuger in Kernkraftwerken

Die Erfindung betrifft eine Inspektionseinrichtung für Wärmetauscherrohre mit einem Versorgungsschlauch für ein Meßgerät, der mit einer Positioniereinrichtung den Rohren des Wärmetauschers zugeordnet wird. Eine solche Inspektionseinrichtung, die in der deutschen Patentschrift 2 263 143 beschrieben ist, wird vor allem bei Dampferzeugern in Kernkraftwerken deswegen eingesetzt, weil die Zugänglichkeit wegen Radioaktivität eingeschränkt ist, so daß fernbedienbare Prüfeinrichtungen eingesetzt werden. Im übrigen sind solche Inspektionseinrichtungen auch dann von Vorteil, wenn der Zugang für Bedienungspersonal aus anderen Gründen, zum Beispiel durch extreme Temperaturen oder ungewöhnliche Gasatmosphären erschwert ist.

Die bekannte Inspektionseinrichtung soll mit der Erfindung dahingehend verbessert werden, daß die Prüfung der Rohre des Wärmetauscher noch einfacher, d.h. mit noch weniger Personaleinsatz insbesondere in dem strahlungstechnisch am stärksten gefährdeten Bereich ausgeführt werden kann, wo der Versorgungsschlauch an der Positioniereinrichtung angebracht ist, die ihn auf die Rohre des Wärmetauschers einstellt. Letztlich ist das Ziel eine Automatisierung des Prüfvorganges, mit der der Personaleinsatz zwischen dem Einbau und Ausbau der Inspektionseinrichtung völlig überflüssig wird.

Nach der Erfindung ist ein Rohrstück mit dem Versorgungsschlauch verbunden, das im Weg des Meßgerätes zu den Rohren des Wärmetauschers liegt und in Abmessungen und Material mindestens weitgehend mit den Rohren des Wärmetauschers übereinstimmt und eine definierte Fehlerstelle aufweist. Damit kann bei jedem Einfahren des Meßgerätes aus dem Versorgungsschlauch in ein zu prüfendes Rohr des Wärmetauschers eine Testmessung vorgenommen werden, mit der die richtige Wirkungsweise des Meßgerätes kontrolliert und gegebenenfalls eine Justierung oder eine Eichung ermöglicht wird. Die gleiche Möglichkeit besteht beim Zurückziehen des Meßgerätes aus dem jeweiligen Wärmetauscherrohr. Jedenfalls ist für die Überwachung von Meßgeräten kein Personaleinsatz am Wärmetauscher mehr erforderlich, unabhängig davon, ob das im folgenden als Testrohr bezeichnete Rohrstück an dem dem Wärmetauscher abgekehrten Ende des Versorgungsschlauches oder aber unmittelbar an der Positioniereinrichtung angebracht ist, was eine bevorzugte Ausführungsform der Erfindung ist.

Die Fehlerstelle in dem Testrohr ist vorteilhaft eine Bohrung. Ihr Durchmesser kann zum Beispiel in der Größe der Wandstärke des Rohrstückes liegen. Man kann aber auch einen Schlitz definierter Abmessungen verwenden. Allgemein läßt sich sagen, daß die Fehlerstelle auf die Art des Meßgerätes und die voraussichtliche Form der an den Wärmetauscherrohren erwarteten Fehler abzustellen ist.

Das Testrohr kann auswechselbar in der Positioniereinrichtung angeordnet sein. Man kann dann eine Inspektionseinrichtung Wärmetauschern mit unterschiedlichen Rohren anpassen und so zum Beispiel im Hinblick auf das Material eine genaue Überprüfung der Meßgeräte erhalten.

Damit die Prüfung des Meßgeräts beim Einbau des Testrohres in die Positioniereinrichtung nicht durch deren Teile verfälscht wird, kann man das Testrohr mit einem so großen Abstand von der Fehlerstelle fassen, daß eine Beeinflussung des Meßgerätes durch die Fassung vermieden ist. Zweckmäßigerweise ist der Durchmesser der Fassung im Bereich der Fehlerstelle mindestens doppelt so groß wie der Durchmesser des Testrohres. Alternativ kann man für die Fassung aber auch Werkstoffe verwenden, die auf die von dem Meßgerät benutzten physikalischen Funktionen nicht ansprechen, zum Beispiel Kunststoffe, die bei Wirbelstrommessungen unwirksam bleiben. Jedenfalls ist es vorteilhaft, wenn die Fassung, die einen Testrohrköcher bildet, mit dem einen Teil einer Schnellkupplung versehen ist, mit der der Versorgungsschlauch anzubringen ist.

Kunststoffe können ferner dann vorteilhaft sein, wenn man dem Testrohr gemäß der weiteren Erfindung ein Rohr aus transparentem Material zur Beobachtung der Stellung des Meßgeräts zuordnen will. Ein solches "Schauglas", das an sich auch aus Glas bestehen kann, wenn man von der Bruchgefahr absieht, liegt zweckmäßig zwischen dem Testrohrstück und den zu prüfenden Rohren des Wärmetauschers. Dabei kann es gleichzeitig als Einführungstrichter wirken, der mit einem konisch zugespitzten freien Ende mit kleinerem Außendurchmesser als der Innendurchmesser der zu prüfenden Rohre das Anfahren der Rohrpositionen erleichtert. Zwischen dem Testrohr und dem Schauglas kann vorteilhaft mit einem Kugelgelenk für eine das Einstellen erleichternde Beweglichkeit gesorgt werden.

Zusätzlich zu dem Schauglas, aber auch unabhängig davon und von der Anordnung des Testrohres, kann die Automatisierung der Inspektion und prüfung durch einen berührungslos arbeitenden Stellungsmelder für das Meßgerät erreicht werden. Der Stellungsmelder kann auf magnetischer (induktiver) oder kapazitiver Basis funktionieren. Dabei werden entweder besondere, gewollte Metallanhäufungen des Meßgerätes, wie Sondenspulen, Sondensteckverbindung einer Prüfsonde, "erkannt" oder das Vorhandensein der in den Versorgungsschlauch eingezogenen Meßkabel mit metallischer Leiter-Litze registriert. Die Meßkabel dienen der Übertragung des Prüfsignals von der Prüfsonde zur eigentlichen Meßeinrichtung mit Prüfelektronik, Abgleichbrücke usw., die an strahlengeschütztem Ort bei einem Manipulatorfahrstand plaziert ist. Befindet sich also ein Meßkabel oder eine Sonde im Stellungsmelder, so ist der Betrieb der Fahrmotoren der Positioniereinrichtung nicht möglich. Diese Verriegelung ist besonders deswegen vorteilhaft, da bei Fehlbedienung der Einrichtung, also zu frühzeitigem Verfahren der Positioniereinrichtung eine Gerätebeschädigung die Folge ist und das sehr dosisintensive Reparieren im Bereich hoher Ortsdosisleistung erfordert. Das elektrische Signal der Stellungsmeldung kann auch zur Steuerung der Fahrbewegung des Meßgerätes dienen, zum Beispiel zur Ausschaltung der Vorschubbewegung der Meßsonde, also als Endschalter wirken. Damit zuvor noch das Testrohr durchlaufen wird, wird der Stellungsmelder auf der dem Wärmetauscher abgekehrten Seite angeordnet. Der Stellungsmelder kann aber auch gegebenenfalls zusätzlich an einer Vorschubeinrichtung für das Meßgerät, also an dem dem Wärmetauscher abgekehrten Ende des Versorgungsschlauches liegen. In beiden Fällen kann der Versorgungsschlauch mit Schnellkupplungen angeschlossen werden.

Die Integration des Testrohres in die Positioniereinrichtung einschließlich Versorgungsschlauch in Verbindung mit der automatischen Abschaltung bei der Sondenwechselposition erleichtern den Sondenwechsel ganz wesentlich. Die bei Wirbelstromprüfungen an Dampferzeuger-Heizrohren insgesamt applizierte Gesamtdosis wird außer beim Einbau der Positioniereinrichtung in die Primärkammer des Dampferzeugers ganz wesentlich von einer Vielzahl von Aufenthalten im Strahlenbereich bestimmt, die bisher für den Wechsel von Sonden und deren Justierung notwendig war. Die Anzahl und Dauer dieser in der Summe sehr dosisintensiven Aufenthalte kann durch die Erfindungen wesentlich verringert werden, was auch eine Reduktion des Personalbedarfs bedeutet.

Zur näheren Erläuterung der Erfindung wird anhand der beiliegenden Zeichnung ein Ausführungsbeispiel beschrieben. Dabei zeigt Fig. 1 den grundsätzlichen Aufbau der Inspektionseinrichtung, Fig. 2 die Anbringung des Schlauches an der Führung und Fig. 3 einen Schnitt durch die Führung in dem für die Erfindung wesentlichen Bereich.

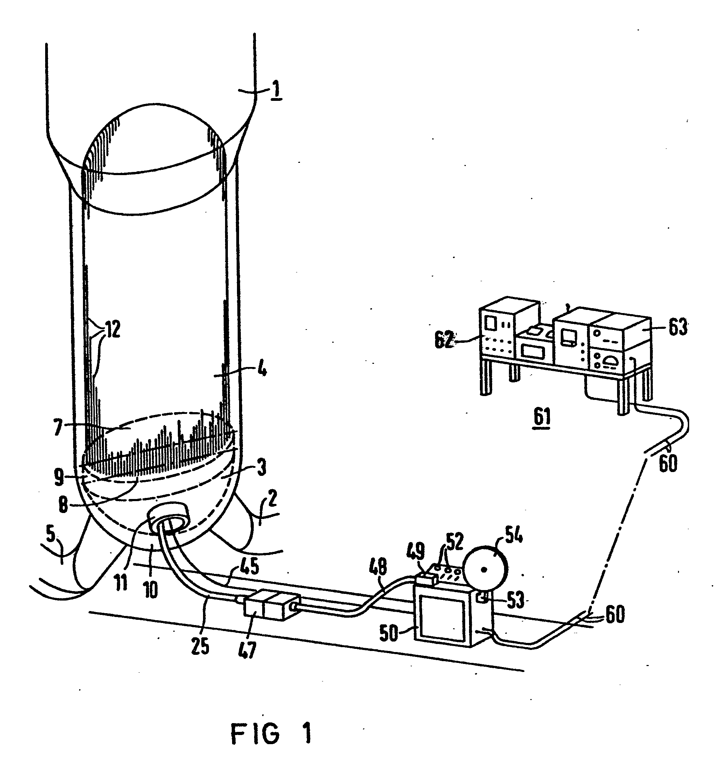

Fig. 1 zeigt perspektivisch einen Dampferzeuger 1 eines nicht weiter gezeichneten Kernkraftwerkes. Der Dampferzeuger 1 gehört zu einem Druckwasserreaktor, dessen Primärkühlwasser durch eine Leitung 2 in eine Primärkammer 3 und von dort aus durch eine U-Rohrbündel 4 geführt wird. Aus dem U-Rohrbündel gelangt das Primärkühlwasser in die Rückleitung 5 zum nicht sichtbaren Reaktordruckbehälter.

Das U-Rohrbündel 4 ist mit seinen beiden Schenkeln, die jeweils einen etwa halbkreisförmigen Querschnitt aufweisen, in den Bereichen 7 und 8 eines Rohrbodens 9 befestigt, der die Primärkammer 3 einseitig begrenzt. Den unteren Abschluß der Primärkammer 3 bildet ein Kugelboden 10 mit einem Mannloch 11 als Zugang.

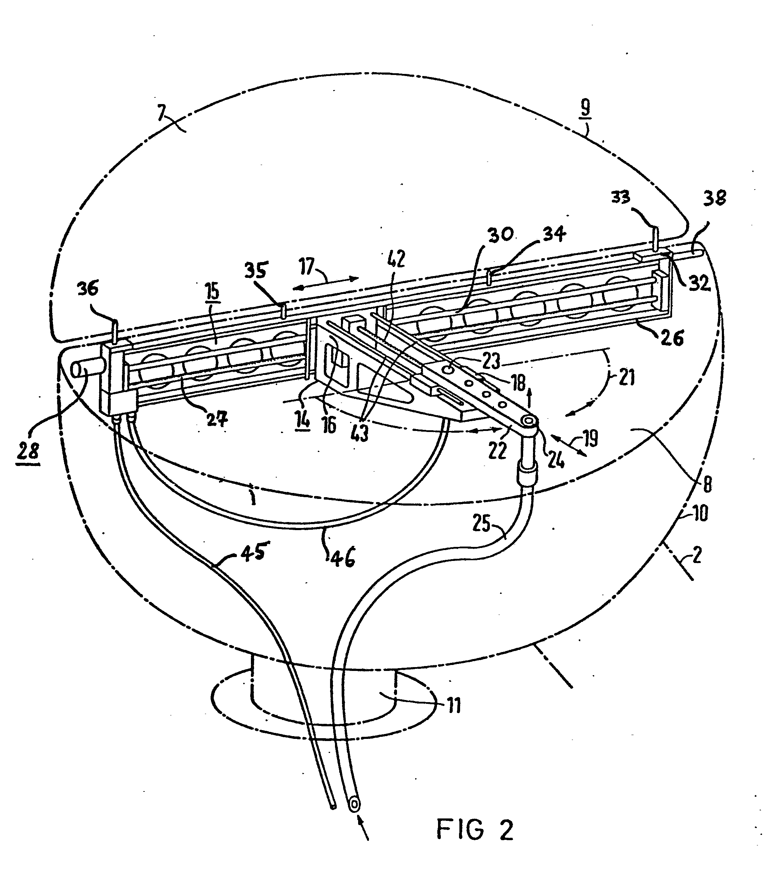

Zur Inspektion der einzelnen Rohre 12 des U-Rohrbündels 4, die in der Fig. 1 nur durch Striche angedeutet sind, wird in der Primärkammer 3 eine Positioniereinrichtung 14 untergebracht, die in Fig. 2 in größerem Maßstab ebenfalls perspektivisch dargestellt ist. Die Einrichtung 14 umfaßt als wesentlichen Bestandteil einen Geräteträger 15. An diesem ist ein Support 16 geradlinig verstellbar geführt, wie durch den Pfeil 17 angedeutet ist. Auf dem Support 16 sitzt ein Schlitten 18, der ebenfalls geradlinig hin- und hergehend verstellbar ist, wie der Pfeil 19 anzeigt. Die Verstellrichtung ist rechtwinklig zu der durch den Pfeil 17 angedeuteten Verstellrichtung des Supports 16.

Auf dem Schlitten 18 ist ein Ausleger 22 mit einem Schwenklager 23 befestigt. Der Schwenkbereich des Auslegers 22 ist durch den strichpunktiert gezeichneten Kreisbogen 21 angedeutet. Am freien Ende des Auslegers 22 ist bei 24 ein Versorgungsschlauch 25 angebracht, durch den Meßeinrichtungen und/oder Werkzeuge zu den in Fig. 2 nicht näher dargestellten Rohren am Rohrboden 9 geführt werden können.

Der Geräteträger 15 besteht aus einem leichten, aber formsteifen Blechträger 26, an dessen Enden eine Spindel 27 gelagert ist. Die Spindel ist mit einem Motor 28 drehbar, wobei der Support 16 nach Art einer Wandermutter verstellt wird. Eine Welle 30 sorgt dabei für eine geradlinige Führung.

An den Enden des Geräteträgers 15 sind im Bereich der Spindel 27 und der Stange 30 Versteifungen befestigt, die zu einer Zentriereinrichtung 32 mit den angespitzten Zentrierstiften 34 und 35 gehören. Damit kann der Geräteträger 15 in bezug auf die Bohrungen des Rohrbodens 9 und die damit übereinstimmenden Rohre 12 des U-Rohrbündels 4 ausgerichtet werden. Nach dem Zentrieren wird der Geräteträger mit Hilfe eines Distanzstückes 38 und zweier Klemmvorrichtungen 33 und 36 festgelegt.

Der Schlitten 18 ist auf dem Support 16 ebenfalls mit Hilfe einer Spindel 42 verstellbar, auf der der Schlitten 18 als Wandermutter läuft. Zwei Stangen 43 ergeben die gewünschte Führung. Der zur Betätigung dienende Motor ist nicht näher dargestellt. Er wird ebenso wie der Motor 28 über Kabel 45 und 46 mit Energie versorgt.

Wie Fig. 1 näher erkennen läßt, besitzt der Versorgungsschlauch 25 an seinem dem Dampferzeuger 1 abgekehrten Ende eine Vorschubeinrichtung 47. Dort ist ein Einschubschlauch 48 angebracht, der in einem Einschubgehäuse 49 auf einem Steuerpult 50 endet. Das Steuerpult 50 hat neben Bedienungsorganen 52 einen Ständer 53 für eine Gerätetrommel 54. Auf dieser sind Transportschläuche aufgespult, an deren einem Ende das für die Untersuchung des Dampferzeugers vorgesehene Meßgerät angebracht ist. Die Transportschläuche haben einen kleineren Außendurchmesser als der Innendurchmesser des Versorgungsschlauches 25. Deshalb sind sie in diesem gegebenenfalls mit Hilfe von Wälzkörpern leicht verschiebbar geführt.

Mit dem Steuerpult 50 sind über das Versorgungskabel 45 auch die Antriebsmotoren zur Verstellung des Versorgungsschlauches 25 verbunden, d.h. die für Support 16, Schlitten 18 und Ausleger 22. Deshalb kann ein Meßgerät nach dem Einführen in den Einschubschlauch von der Vorschubeinrichtung 47 zum Rohrboden 9 und in das gewünschte, dort beginnende Rohr 12 des U-Rohrbündels gelenkt werden, ohne daß Bedienungspersonal in strahlungsgefährdeter Nähe des Dampferzeugers arbeiten muß.

Die von dem Meßgerät ermittelten Werte können über Kabel 60 zu einem Leitstand 61 übermittelt werden. Der Leitstand umfaßt u.a. Geräte 62 zum Aufzeichnen von Meßdaten, z.B. Magnetspeicher, sowie Bedienungsmöglichkeiten 63, die eine genaue Steuerung des Auslegers 22 ermöglichen.

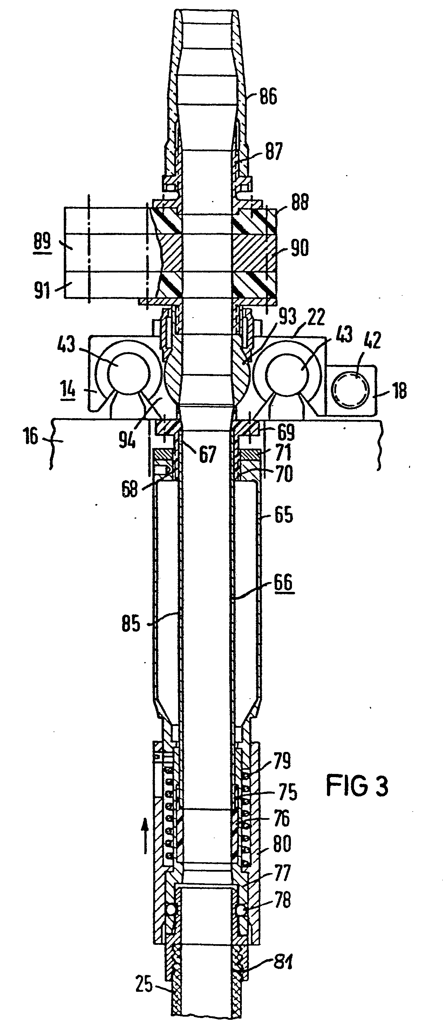

Der in Fig. 3 dargestellte Schnitt durch die Positioniereinrichtung 14 längs der Achse des Versorgungsschlauches 25 zeigt den Schlitten 18 mit der Spindel 42 und den Führungsstangen 43. An der Unterseite des Auslegers 22 ist eine Fassung 65 angeflanscht, die als Testrohrköcher dient. Sien Durchmesser ist doppelt so groß wie ein davon umschlossenes zylindrisches Rohrstück 66, das das Testrohr bildet. Das Testrohr 66 sitzt mit seiner dem Dampferzeuger zugekehrten Stirnseite 67 in einer Kunststoffbuchse 68, die mit einem Befestigungsflansch 69 versehen ist. Die Buchse ist mit einem Gewinde 70 in eine Bohrung der Fassung 65 eingeschraubt und dort mit einer Kontermutter 71 gesichert.

Das andere Ende 75 des Testrohres 66 ist in einer Kunststoffhülse 76 gefaßt. Diese sitzt in einem Halterohr 77, das mit Kugeln 78 für eine Schnellkupplung zum Anschluß des Versorgungsschlauches 25 versehen ist. Das Halterohr 77 wird von einer Feder 79 in die Sperrlage gedrückt, bei der die Kugeln 78 von einer Schiebehülse 80 in der Sperrstellung gehalten werden, so daß das Ende 81 des nicht weiter gezeichneten Versorgungsschlauches 25 festgehalten wird.

Das Testrohr 66 ist in den Kunststoffteilen 68, 76 auswechselbar gehalten. Es stimmt in Abmessungen und Material mit den zu prüfenden Rohren 12 des Dampferzeugers 1 überein. Deshalb können Meßgeräte, insbesondere Wirbelstromsonden, beim Einfahren in den Dampferzeuger geprüft und bei Bedarf justiert und geeicht werden. Zu diesem Zweck

wird das Ansprechen der Meßgeräte auf eine Testbohrung 85 ermittelt, die an einer definierten Stelle des Rohrstückes 66 mit definierten Abmessungen vorgesehen ist. Beim Ausführungsbeispiel ist der Durchmesser der zylindrischen Testbohrung 85 so groß wie die Wanddicke des Testrohres 66.

Oberhalb des Auslegers 22 ist ein Führungsteil 86 aus transparentem Kunststoff, vorzugsweise aus Polyacrylat, vorgesehen, das zugleich als Schauglas für die Beobachtung der in die Rohre 12 einfahrenden Meßgeräte dienen kann. Das Führungsteil 86 ist konisch zugespitzt, so daß der Außendurchmesser seines freien Endes um 1 bis 3 mm kleiner ist als der Innendurchmesser der zu untersuchenden Rohre 12. Damit wird das Anfahren der Rohrpositionen erleichtert, zumal durch ein später beschriebenes Kugelgelenk eine gewisse Beweglichkeit gegeben ist.

Das Führungsteil 86 ist auf einem mit einem Flansch versehenen Gewindestutzen 87 aufgeschraubt. Dieser sitzt auf der oberen Kunststoffplatte 88 einer berührungslosen Stellungsmeldeeinrichtung 89 auf induktiver Basis, zu der ein sogenannter Ringinitiator 90 und eine untere Kunststoffplatte 91 gehört. Der Ringinitiator gestattet eine elektromagnetische Erfassung der Stellung des durch den Versorgungsschlauch 25 in das Rohr 12 oder umgekehrt fahrenden Meßgerätes.

Das Signal des Überwachungsinitiators 90 kann außerdem zum Start eines Wegzählers genutzt werden, der als Vor-Rückwärts-Zähler die jeweils aktuelle Weglänge der Prüfsonde im Heizrohr 12 bestimmt und anzeigt. Dazu wird die translatorische Transportschlauchbewegung mit Hilfe eines Reibrades zum Antrieb eines inkrementalen Drehimpulsgebers gewandelt, dessen Impulse durch die Wahl eines geeigneten Reibraddurchmessers bzw. Impulszahl pro Geberumdrehung den zurückgelegten Weg der Prüfsonde in zum Beispiel Millimeter entsprechen. Durch Start des Zählers mit Hilfe des Ringinitiators 90 wird also jeweils die Distanz der Prüfsonde zum Ringinitiator bestimmt. Diese Distanz ist jeweils um den konstanten Abstand des Ringinitiators zum Rohrbeginn größer als die aktuelle Prüflänge.

Beim Ausfahren der Prüfsonde aus dem Heizrohr kann das Signal des Ringinitiators zum Abschalten des Sondenvorschubmotors genutzt werden. Bei Anbau des Initiators an den Leitschlauch, also unterhalb des Testrohres, kann bei jedem Passieren des Testfehlers die Sondenjustierung überprüft werden. Da das Meßsignal in der Regel auf Magnetband gespeichert wird, ist auch nachträglich eine Überprüfung der "Sondeneichung" möglich.

Die Stellungsmeldeeinrichtung 90 ist in einem Kugelkörper 93 eingeschraubt, der in einer entsprechenden Kugelpfanne 94 des Auslegers 22 festgeklemmt ist. Damit ist die schon erwähnte Beweglichkeit für das Führungsteil 86 gegeben. Die Stellungsmeldeeinrichtung kann aber auch an anderer Stelle angebracht werden, um einen automatisierten Prüfbetrieb zu ermöglichen. So muß zum Beispiel zum Austausch verschlissener Prüfsonden diese im Versorgungsschlauch 25 mindestens bis zur Vorschubeinrichtung 47 zurückgezogen werden. Die Prüfsonde ist als Verschleißteil über eine Rundsteckverbindung mit dem Transportschlauch verkuppelt. Auch bei Änderung der Prüfgeometrie (z.B. Rohrbogenprüfung statt Geradrohrprüfung) ist ein Austausch der Prüfsonde notwendig.

Der Prüfsondenwechsel war bislang nur bei Vorhandensein einer Person unmittelbar im Bereich des Mannloches bei einer Ortsdosisleistung möglich. Durch Handzeichen wurde verhindert, daß die Prüfsonde beim Zurückziehen in die Reibradsätze der Vorschubeinrichtung 47 geriet und dabei zerstört wird bzw. dort Schaden anrichtet.

Bei der Erfindung wird dagegen ein Initiator 90 unmittelbar an die Vorschubeinheit 47 oder das dort gelegene Ende des Versorgungsschlauches angebaut. Beim Zurückziehen der Prüfsonde mit Hilfe des Sondenvorschubmotors verursacht die metallische Rundsteckverbindung zwischen Prüfsonde und Transportschlauch ein Signal, das zur Abschaltung des Vorschubmotors genutzt wird.

Das Testrohr 66 mit seinem Testrohrköcher 65 und/oder der Stellungsmelder 89 können aber auch an anderer Stelle, zum Beispiel am Steuerpult 50 angebracht werden, wenn dort die zur Messung eingesetzten Prüfsonden zu wechseln sind. Der Stellungsmelder kann in diesem Fall zum Beispiel mit dem Antriebsmotor für die Gerätetrommel 54 gekoppelt sein. Außerdem kann man auch mehrere Testrohre und/oder mehrere Stellungsmelder mit gegebenenfalls unterschiedlichen Steueraufgaben zur automatisierten Prüfung im Sinne der Erfindung einsetzen.

## Patentansprüche

1. Inspektionseinrichtung für Wärmetauscherrohre, insbesondere für Dampferzeuger in Kernkraftwerken, mit einem Versorgungsschlauch für die Zuführung eines Meßgerätes, der mit einer Positioniereinrichtung den Rohren des Wärmetauschers zugeordnet wird, dadurch gekennzeichnet, daß ein Rohrstück (66) mit dem Versorgungsschlauch (25) verbunden ist, das im Weg des Meßgerätes zu den Rohren (12) des Wärmetauschers (1) liegt und in Abmessungen und Material mindestens weitgehend mit den Rohren (12) des Wärmetauschers (1) übereinstimmt und eine definierte Fehlerstelle (85) aufweist.

2. Inspektionseinrichtung nach Anspruch 1, dadurch gekennzeichnet, daß die definierte Fehlerstelle (85) eine Bohrung ist.

3. Inspektionseinrichtung nach Anspruch 1 oder 2, dadurch gekennzeichnet, daß das Rohrstück (66) auswechselbar in der Positioniereinrichtung (14) angeordnet ist.

4. Inspektionseinrichtung nach Anspruch 1, 2 oder 3, dadurch gekennzeichnet, daß das Rohrstück (66) mit einem so großen radialen Abstand von der definierten Fehlerstelle (85), insbesondere an der Positioniereinrichtung (14) gefaßt ist, daß eine Beeinflussung des Meßgerätes durch die Fassung (65) vermieden ist.

5. Inspektionseinrichtung nach Anspruch 4, dadurch gekennzeichnet, daß der Durchmesser einer rohrförmigen Fassung (65) im Bereich der definierten Fehlerstelle (85) mindestens doppelt so groß wie der Durchmesser des Rohrstückes (66) ist.

6. Inspektionseinrichtung nach einem der Ansprüche 1 bis 5, dadurch gekennzeichnet, daß eine Fassung des Rohrstückes (66) mindestens teilweise aus Kunststoff besteht, während das Rohrstück (66) aus den gleichen Metall wie die Rohre (12) des Wärmetauschers (1) hergestellt ist.

7. Inspektionseinrichtung nach einem der Ansprüche 1 bis 6, dadurch gekennzeichnet, daß dem Rohrstück (66) ein Rohr (86) aus transparentem Material als Schauglas zur Beobachtung der Stellung des Meßgerätes zugeordnet ist.

8. Inspektionseinrichtung nach Anspruch 7, dadurch gekennzeichnet, daß das Schauglas (86) zwischen dem Rohrstück (66) und den zu prüfenden Rohren (12) des Dampferzeugers (1) liegt und vorzugsweise mit einem Kugelgelenk (93, 94) mit dem Rohrstück (66) verbunden ist.

9. Inspektionseinrichtung nach einem der Ansprüche 1 bis 8, dadurch gekennzeichnet, daß dem Rohrstück (66) ein berührungslos arbeitender Stellungsmelder (89) für das Meßgerät zugeordnet ist.

10. Inspektionseinrichtung nach Anspruch 9, dadurch gekennzeichnet, daß der Stellungsmelder (89) auf der dem Wärmetauscher (1) abgekehrten Seite des Rohrstückes (66) angeordnet ist.

11. Inspektionseinrichtung nach Anspruch 10, dadurch gekennzeichnet, daß zwischen dem Rohrstück (66) und dem Stellungsmelder (89) eine Schnellkupplung liegt.

12. Inspektionseinrichtung nach Anspruch 10 oder 11, dadurch gekennzeichnet, daß der Stellungsmelder (89) an einer Vorschubeinrichtung (47) für das Meßgerät angeordnet ist.

13. Inspektionseinrichtung nach Anspruch 12, dadurch gekennzeichnet, daß der Stellungsmelder (89) mit der Vorschubeinrichtung (47) derart verbunden ist, daß das Fahren des Meßgerätes bei Erreichen des Stellungsmelders (89) selbsttätig gestoppt wird.

## Revendications

1. Dispositif de vérification pour des tubes d'échangeurs de chaleur, notamment pour générateurs de vapeur de centrales nucléaires comprenant un tuyau souple pour l'introduction d'un appareil qui est associé aux tubes de l'échangeur de chaleur au moyen d'un dispositif de positionnement, caractérisé en ce qu'un tronçon (66) de tube est relié au dit tuyau souple (25) et se trouve sur le trajet menant de l'appareil de mesure aux tubes (12) de l'échangeur de chaleur (1) ses dimensions et le matériau, avec lequel il est fait correspondant, au moins pour l'essentiel, à ceux des tubes (12) de l'échangeur de chaleur (1) et présentant un défaut (85) en un emplacement défini.

2. Dispositif suivant la revendication 1, caractérisé en ce que le défaut (85) en un endroit défini est un trou.

3. Dispositif suivant la revendication 1 ou 2, caractérisé en ce que le tronçon de tube (66) est monté dans le dispositif de positionnement de manière à pouvoir être échangé.

4. Dispositif suivant la revendication 1, 2, ou 3, caractérisé en ce que le tronçon de tube (66) est monté, notamment sur le dispositif (14) de positionnement, à une distance radiale si grande du défaut (85) se trouvant en un emplacement défini que toute influence de la monture (65) sur l'appareil de mesure est évitée.

5. Dispositif suivant la revendication 4, caractérisé en ce que le diamètre d'une monture tubulaire (65) est dans la zone du défaut (85) prévu en un emplacement défini, au moins deux fois plus grand que le diamètre du tronçon de tube (66).

6. Dispositif suivant l'une des revendications 1 à 5, caractérisé en ce qu'une monture du tronçon de tube (66) est, au moins partiellement, en matière plastique tandis que le tronçon de tube (66) est en le même métal que les tubes (12) de l'échangeur de chaleur (1).

7. Dispositif suivant l'une des revendications 1 à 6, caractérisé en ce que au tronçon (66) de tube est associé un tube (86) en matière transparente servant de verre-regard pour observer la position de l'appareil de mesure.

8. Dispositif suivant la revendication 7, caractérisé en ce que le verre-regard (86) est interposé entre le tronçon de tube (66) et les tubes (12) à vérifier du générateur (1) de vapeur et est relié au tronçon de tube (66), de préférence par une articulation à rotule (93, 94).

9. Dispositif suivant l'une quelconque des revendications 1 à 8, caractérisé en ce que au tronçon de tube (66) est associé un indicateur de position (89) pour l'appareil de mesure, et opérant sans contact.

10. Dispositif suivant la revendication 9, caractérisé en ce que l'indicateur de position (89) est disposé du côté, éloigné de l'échangeur de chaleur (1), du tronçon de tube (66).

11. Dispositif suivant la revendication 10, caractérisé en ce que entre le tronçon de tube (66) et l'indicateur de position (89) est interposé un accouplement rapide.

12. Dispositif suivant la revendication 10 ou 11, caractérisé en ce que l'indicateur de position (89) est monté sur un dispositif d'avance (47) pour l'appareil de mesure.

13. Dispositif suivant la revendication 12, caractérisé en ce que l'indicateur de position (89) est relié au dispositif d'avance (47) de manière à ce que le déplacement de l'appareil de mesure s'arrête automatiquement lorsque l'indicateur de position (89) est atteint.

**Claims**

1. Inspection arrangement for heat exchanger pipes, in particular for steam generators in nuclear power stations, having a maintenance tube for the introduction of a measuring device, which maintenance tube is correlated with the pipes of the heat exchanger by means of a positioning device, characterised in that a pipe section (66) is connected to the maintenance tube (25) which pipe section lies in the path of the measuring device to the pipes (12) of the heat exchanger (1) and at least to a large extent corresponds to the pipes (12) of the heat exchanger (1) in dimensions and material and has a defined fault position (85).

2. Inspection arrangement as claimed in Claim 1, characterised in that the defined fault position (85) is a boring.

3. Inspection device as claimed in Claim 1 or 2, characterised in that the pipe section (66) is removably arranged in the positioning device (14).

4. Inspection device as claimed in Claim 1, 2 or 3, characterised in that the pipe section (66) is held, in particular at the positioning device (14), at so great a radial distance from the defined fault position (85) that influencing of the measuring device by the holder (65) is avoided.

5. Inspection device as claimed in Claim 4, characterised in that in the region of the defined fault position (85), the diameter of a tubular holder (65) is at least twice as large as the diameter of the pipe section (66).

6. Inspection device as claimed in one of the Claims 1 to 5, characterised in that a holder for the pipe section (66) consists at least in part of synthetic resin material, whilst the pipe section (66) is manufactured from the same metal as the pipes (12) of the heat exchanger (1).

7. Inspection device as claimed in one of the Claims 1 to 6, characterised in that the pipe section (66) is provided with a pipe (86) consisting of transparent material as a viewing window for observing the position of the measuring device.

8. Inspection device as claimed in Claim 7, characterised in that the viewing window (86) is arranged between the pipe section (66) and the pipes (12) of the steam generator (1) which are to be inspected and that it is connected to the pipe section (66) preferably by means of a ball-and-socket joint (93, 94).

9. Inspection device as claimed in one of the Claims 1 to 8, characterised in that the pipe section (66) is provided with a remotely operating position indicator (89) for the measuring device.

10. Inspection device as claimed in Claim 9, characterised in that the position indicator (89) is arranged on the side of the pipe section (66) which faces away from the heat exchanger (1).

11. Inspection device as claimed in Claim 10, characterised in that between the pipe section (66) and the position indicator (89) there is arranged a rapid action coupling.

12. Inspection device as claimed in Claim 10 or 11, characterised in that the position indicator (89) is arranged at a feeding device (47) for the measuring device.

13. Inspection device as claimed in Claim 12, characterised in that the position indicator (89) is connected to the feeding device (47) in such manner that the travel of the measuring device is automatically stopped when the position indicator (89) has been reached.

FIG 1

FIG 2

FIG 3